# EUROPEAN PATENT APPLICATION

(11) **EP 4 672 347 A1**
(43) Date of publication of application: **31.12.2025**
(21) Application number: 25183901.5
(22) Date of filing: 19.06.2025
(51) Int. Cl.: H01M 4/04

(54) **ELECTRODE MANUFACTURING APPARATUS**

(30) Priority: 27.06.2024 KR 20240084743
(71) Applicant: SAMSUNG SDI CO., LTD., Yongin-si, Gyeonggi-do 17084 (KR)
(72) Inventor: CHOI, Kyuchul, Yongin-si 17084 (KR)
(74) Representative: Marks & Clerk LLP

(57) **Abstract**

An embodiment provides an electrode manufacturing apparatus including a first roller configured to move an electrode plate that includes a coated portion and a non-coated portion in a first direction and a second roller that is spaced from the first roller and is configured to move the electrode plate in the first direction. A jig unit that is disposed between the first roller and the second roller and is configured to press and fix the electrode plate in a third direction intersecting the first direction. A laser cutting portion is provided adjacent to the jig unit and is configured to cut at least one of the coated and uncoated portions of the electrode plate fixed to the jig unit into a set shape using a laser beam. A controller is connected to the jig unit and the laser cutting portion and is configured to control the jig unit and the laser cutting portion.

## Description

### BACKGROUND

### (a) Field

The present disclosure relates to an electrode manufacturing apparatus.

### (b) Description of the Related Art

An electrode manufacturing apparatus manufactures an electrode for a rechargeable battery that may be charged and discharged.

Recently, electrode manufacturing apparatuses are configured to manufacture electrodes by transporting electrode plates in a roll-to-roll manner and cutting the electrode plates into a set shape using a laser beam. However, conventional electrode manufacturing devices have a problem in that the electrode plates may be misaligned when processing using a laser beam because the electrode plates unintentionally move out of alignment when being transported in a roll-to-roll manner.

### SUMMARY

Embodiments provide an electrode manufacturing apparatus with improved electrode processing precision by cutting the electrode plate into a set shape using a laser beam even when the electrode plate is misaligned.

An embodiment provides an electrode manufacturing apparatus including: a first roller configured to move an electrode plate that includes a coated portion having an electrode active material extending in a first direction and a non-coated portion adjacent to the coating portion in a second direction intersecting the first direction; a second roller that is spaced from the first roller and configured to move the electrode plate in the first direction; a jig unit disposed between the first roller and the second roller, the jig unit being configured to press and fix the electrode plate in a third direction intersecting the first direction; a laser cutting portion that is adjacent to the jig unit and is configured to cut at least one of the coated and uncoated portions of the electrode plate fixed to the jig unit into a set shape using a laser beam; and a controller that is connected to the jig unit and the laser cutting portion and is configured to control the jig unit and the laser cutting portion.

The electrode manufacturing apparatus may further include a vision portion that is connected to the controller and is configured to sense a misalignment value in the second direction of the electrode plate moving in the first direction.

The controller may be configured to control a fixing position of the jig unit with respect to the electrode plate and an irradiation position of the laser beam of the laser cutting portion based on the misalignment value of the electrode plate in the second direction.

The jig unit may include a jig portion that includes a guide jig that is configured to support a front surface of the electrode plate facing the front surface of the electrode plate and a pressing jig that is configured to press a rear surface of the electrode plate facing the rear surface of the electrode plate, and a jig moving portion that is configured to move the jig portion.

The jig moving portion may include a cylinder portion configured to move the pressing jig in the third direction; the first moving portion that moves the cylinder portion in the first direction; and a second moving portion configured to move the first moving portion in the second direction.

The jig moving portion may further include a rotating portion configured to rotate the second moving portion around a rotational axis that extends in the third direction.

The cylinder portion may include an elastic portion supporting the pressing jig in the third direction.

The guide jig may include a first opening configured to expose the front surface of the electrode plate, and the pressing jig may include a second opening configured to expose the rear surface of the electrode plate corresponding to the first opening.

The laser cutting portion is positioned in alignment with the guide jig and may be configured to irradiate the laser beam to the electrode plate through the first opening of the guide jig.

The controller may be configured to control a fixing position of the guide jig with respect to the electrode plate and an irradiation position of the laser beam through the first opening based on the misalignment value of the electrode plate in the second direction.

The vision portion may be spaced from the jig unit with the first roller therebetween.

The vision portion may include a first vision roller configured to support a rear surface of the electrode plate, a first camera configured to photograph a front surface of the electrode plate, a second vision roller spaced apart from the first vision roller in the first direction and supporting the front surface of the electrode plate, and a second camera configured to photograph a rear surface of the electrode plate.

The electrode manufacturing apparatus may further include a meandering controller spaced apart from the first roller with the vision portion therebetween, the meandering controlling being configured to control alignment of the electrode plate in the second direction.

The controller may be connected to the meandering controller, and the controller may be configured to control the meandering controller based on the misalignment value of the electrode plate in the second direction.

The electrode manufacturing apparatus may further include a tension controller spaced apart from the vision portion with the meandering controller therebetween, the tension controller being configured to control tension of the electrode plate.

The tension controller may include a dancer roller configured to press the electrode plate in the third direction.

The first roller may include a load cell that is configured to sense tension of the electrode plate.

The controller may be connected to the first roller and the tension controller, and the controller may be configured to control the dancer roller of the tension controller so that the tension of the electrode plate is maintained at a set tension.

The electrode manufacturing apparatus may further include a winder that is adjacent to the second roller and is configured to wind the electrode plate.

According to the embodiment, an electrode manufacturing apparatus is provided with improved electrode processing precision by cutting the electrode plate into a set shape using a laser beam even when the electrode plate is misaligned due to unintentionally meandered while being transported in a roll-to-roll manner.

At least some of the above and other features of the invention are set out in the claims.

### BRIEF DESCRIPTION OF THE DRAWINGS

FIG. 1 illustrates an electrode manufacturing apparatus according to an embodiment.
FIG. 2 is a perspective view of an example of a vision portion of an electrode manufacturing apparatus according to an embodiment.
FIG. 3 is a perspective view of an example of a jig unit of an electrode manufacturing apparatus according to an embodiment.
FIG. 4 is a side view of an example of a jig unit of an electrode manufacturing apparatus according to an embodiment.
FIG. 5 is a top plan view of an example of cutting an electrode plate using a laser beam of an electrode manufacturing apparatus according to an embodiment.
FIG. 6 is a top plan view of another example of cutting an electrode plate using a laser beam of an electrode manufacturing apparatus according to an embodiment.

### DETAILED DESCRIPTION OF THE EMBODIMENTS

The present disclosure will be described with reference to the accompanying drawings in which embodiments of the disclosure are shown. As those skilled in the art will appreciate, the described embodiments may be modified in various different ways without departing from the scope of the present disclosure.

Unless explicitly stated to the contrary, the word "comprise" and variations such as "comprises" and "comprising" should be understood to imply the inclusion of stated elements but not the exclusion of any other elements.

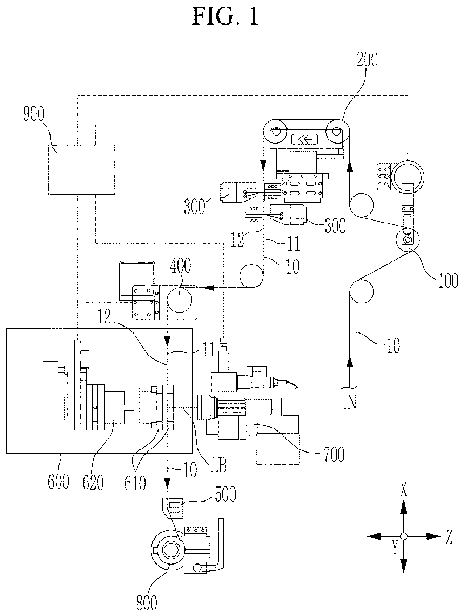

Hereinafter, an electrode manufacturing apparatus according to an embodiment will be described with reference to FIG. 1 to FIG. 6.

An electrode manufacturing apparatus according to an embodiment may include an apparatus for manufacturing an electrode by cutting an electrode plate transported by a roll-to-roll process into a set shape using a laser beam. But the present disclosure is not limited thereto and may include an apparatus for manufacturing an electrode by cutting an electrode plate transported using various known transport devices using various known cutting devices. The electrode manufacturing apparatus may be for manufacturing an electrode included in a rechargeable battery. But the present disclosure is not limited thereto and may include an apparatus for manufacturing various other types of electrodes.

FIG. 1 illustrates an electrode manufacturing apparatus according to an embodiment.

Referring to FIG. 1, the electrode manufacturing apparatus may manufacture an electrode by roll-to-roll transporting of an electrode plate 10 and cutting the electrode plate 10 into a set shape using a laser beam LB.

The electrode plate 10 may include a coated portion including an electrode active material that includes a negative active material or a positive active material on at least one of front and rear surfaces 11 and 12 of various known current collectors, and a non-coated portion adjacent to the coated portion. The coated portion of the electrode plate 10 may be cut into a set shape by the laser beam LB to include an electrode with a negative electrode or a positive electrode. The non-coated portion of the electrode plate 10 may be cut into a set shape by the laser beam LB to include an electrode tab extending from the electrode.

The electrode manufacturing apparatus according to the embodiment includes a tension controller 100, a meandering controller 200, a vision portion 300, a first roller 400, a second roller 500, a jig unit 600, a laser cutting portion 700, a winder 800, and a controller 900.

The tension controller 100 is spaced apart from the vision portion 300 with the meandering controller 200 interposed therebetween. The tension controller 100 controls the tension of the electrode plate 10 moving in a first direction X. The tension controller 100 may include various known electrode plate tension control devices. For example, the tension controller 100 may include a dancer roller that presses the electrode plate 10 in a third direction Z that intersects a first direction X. The dancer roller of the tension controller 100 may move in the third direction Z to control the tension of the electrode plate 10. The tension controller 100 is connected to the controller 900, and the controller 900 may control the dancer roller of the tension controller 100 so that the tension of the electrode plate 10 sensed by the load cell of the first roller 400 is maintained a set tension.

The meandering controller 200 is spaced apart from the first roller 400 with the vision portion 300 interposed therebetween. The meandering controller 200 may be disposed between the vision portion 300 and the tension controller 100. The meandering controller 200 may control the meandering of the electrode plate 10 moving in the first direction X to control the alignment of the electrode plate 10 in a second direction Y intersecting the first direction X. The meandering controller 200 may include various known electrode plate meandering control devices. For example, the meandering controller 200 may include at least one roller rotating in the second direction Y, and the meandering controller 200 may control the meandering of the electrode plate 10 using at least one roller rotating in the second direction Y. The meandering roller may thereby control misalignment of the electrode plate 10 in the second direction Y. For example, the meandering roller may include various known rollers rotating in the first direction X or in the second direction Y or in the third direction. The meandering controller 200 is connected to the controller 900, and the controller 900 may control the meandering controller 200 based on a misalignment value in the second direction Y of the electrode plate 10 moving in the first direction X as sensed by the vision portion 300.

The vision portion 300 is spaced apart from the jig unit 600 with the first roller 400 interposed therebetween. The vision portion 300 may be disposed between the first roller 400 and the meandering controller 200. The vision portion 300 may sense misalignment in the second direction Y of the electrode plate 10 moving in the first direction X. The vision portion 300 may include various known photographing devices (e.g. imaging devices). The vision portion 300 is connected to the controller 900, and the misalignment value in the second direction Y of the electrode plate 10 moving in the first direction X sensed by the vision portion 300 may be transmitted to the controller 900. The controller 900 may control the meandering controller 200, the jig unit 600, and the laser cutting portion 700 based on the misalignment value in the second direction Y of the electrode plate 10 transmitted from the vision portion 300.

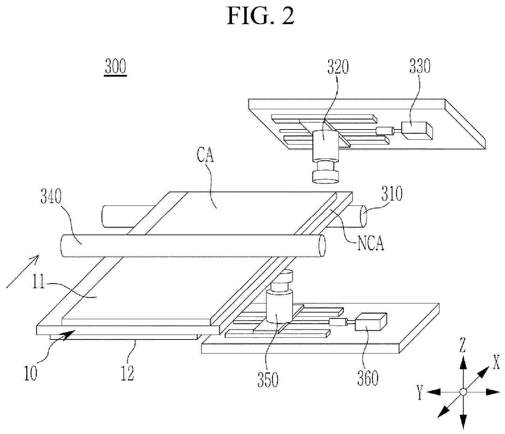

FIG. 2 illustrates a perspective view of a vision portion of an electrode manufacturing apparatus according to an embodiment.

Referring to FIG. 2, for example, the vision portion 300 may include a first vision roller 310, a first camera 320, a first vision moving portion 330, a second vision roller 340, a second camera 350, and a second vision moving portion 360.

The first vision roller 310 may support the rear surface 12 of the electrode plate 10 to transport the electrode plate 10 in the first direction X.

The electrode plate 10 may include a coated portion CA that includes an electrode active material extending in the first direction X and a non-coated portion NCA adjacent to the coated portion CA in the second direction Y. The front surface 11 and the rear surface 12 of the electrode plate 10 may include the coated portion CA and the non-coated portion NCA. But the present disclosure is not limited thereto, and at least one of the front surface 11 and the rear surface 12 of the electrode plate 10 may include the coated portion CA and the non-coated portion NCA.

The first camera 320 may capture an image of the front surface 11 of the electrode plate 10 corresponding to the first vision roller 310. The first vision moving portion 330 may support the first camera 320 and may move the first camera 320 in the second direction Y. The first vision moving portion 330 may include a liner motion (LM) block that supports the first camera 320, an LM rail that guides the LM block in the second direction Y, a screw that moves the LM block in the second direction Y, and a motor that drives the screw. But the present disclosure is not limited thereto and may include various known devices for moving the first camera 320 in the second direction Y.

The second vision roller 340 may be spaced apart from the first vision roller 310 in the first direction X to support the front surface 11 of the electrode plate 10. The second vision roller 340 may support the front surface 11 of the electrode plate 10 to transport the electrode plate 10 in the first direction X.

The second camera 350 may capture an image of the rear surface 12 of the electrode plate 10 corresponding to the second vision roller 340. The second vision moving portion 360 may support the second camera 350 and may move the second camera 350 in the second direction Y. The second vision moving portion 360 may include an LM block that supports the second camera 350, an LM rail that guides the LM block in the second direction Y, a screw that moves the LM block in the second direction Y, and a motor that drives the screw. But the present disclosure is not limited thereto and may include various known devices of moving the second camera 350 in the second direction Y.

The vision portion 300 may sense a misalignment value in the second direction Y of the electrode plate 10 moving in the first direction X by using the first camera 320 and the second camera 350.

Referring again to FIG. 1, the first roller 400 may be positioned between the jig unit 600 and the vision portion 300. The first roller 400 may move the electrode plate 10 in the first direction X. The first roller 400 may include a load cell sensing a tension of the electrode plate 10. The load cell included in the first roller 400 may be in the form of various known load cells. The first roller 400 is connected to the controller 900, and the controller 900 may control the dancer roller of the tension controller 100 so that the tension of the electrode plate 10 sensed by the load cell of the first roller 400 maintains a set tension.

The second roller 500 is spaced apart from the first roller 400 with the jig unit 600 and the laser cutting portion 700 interposed therebetween. The second roller 500 may be disposed between the winder 800 and the jig unit 600. The second roller 500 may move the electrode plate 10 in the first direction X.

The jig unit 600 may be disposed between the first roller 400 and the second roller 500. The jig unit 600 may fix the electrode plate 10 moving in the first direction X by applying pressure in the third direction Z. When the jig unit 600 fixes the electrode plate 10, the movement of the electrode plate 10 in the first direction X is stopped. But the present disclosure is not limited to such a configuration. The jig unit 600 may be connected to the controller 900. The controller 900 may control the fixing position of the jig unit 600 with respect to the electrode plate 10 based on the misalignment value in the second direction Y of the electrode plate 10 that is sensed by the vision portion 300.

The jig unit 600 may include a jig portion 610 and a jig moving portion 620. The jig portion 610 may include a fixing member for pressing and fixing the electrode plate 10 in the third direction Z. The jig moving portion 620 may include a moving member for moving the jig portion 610. The controller 900 may control the jig moving portion 620 based on the misalignment value in the second direction Y of the electrode plate 10 sensed by the vision portion 300 to control the fixing position of the jig portion 610 with respect to the electrode plate 10.

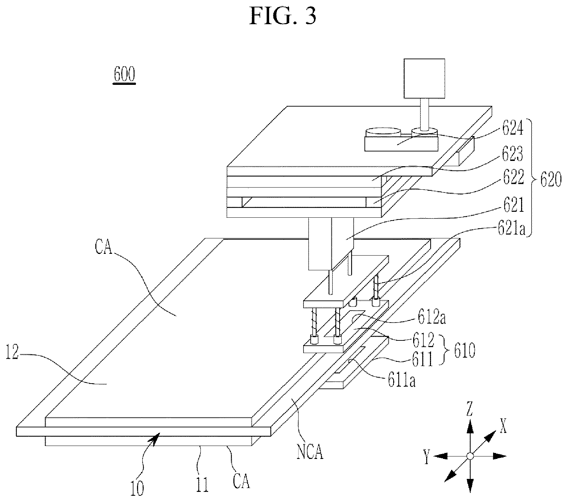

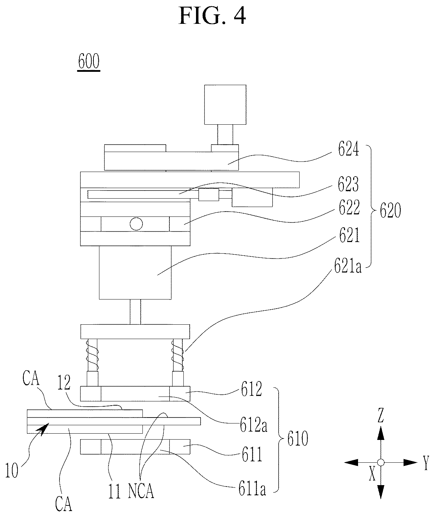

FIG. 3 is a perspective view of an example of a jig unit of an electrode manufacturing apparatus according to an embodiment. FIG. 4 is a side view of an example of a jig unit of an electrode manufacturing apparatus according to an embodiment.

Referring to FIG. 3 and FIG. 4, the jig unit 600 may include the jig portion 610 and the jig moving portion 620. The jig portion 610 may include a guide jig 611 and a pressing jig 612.

The guide jig 611 may support the front surface 11 of the electrode plate 10 to face the front surface 11 of the electrode plate 10. The guide jig 611 may include a first opening 611a exposing the front surface 11 of the electrode plate 10. A laser beam of the laser cutting portion 700 is irradiated through the first opening 611a onto the coated portion CA and the non-coated portion NCA of the electrode plate 10. As such, the coated portion CA and the non-coated portion NCA of the electrode plate 10 may be cut into a set shape. The guide jig 611 may be supported on the jig moving portion 620 together with the pressing jig 612. But the present disclosure is not limited thereto, and the guide jig 611 may be supported on the pressing jig 612 or on other support members.

The pressing jig 612 may be in alignment with the guide jig 611 with the electrode plate 10 interposed therebetween. The pressing jig 612 may press the rear surface 12 of the electrode plate 10. The electrode plate 10 may be fixed between the pressing jig 612 and the guide jig 611. The pressing jig 612 may include a second opening 612a exposing the rear surface 12 of the electrode plate 10 to correspond to the first opening 611a of the guide jig 611. A laser beam irradiated from the laser cutting portion 700 to the electrode plate 10 through the first opening 611a of the guide jig 611 may pass through the second opening 612a of the pressing jig 612. The pressing jig 612 may be supported on the jig moving portion 620 together with the guide jig 611. But the present disclosure is not limited thereto and may be supported on the guide jig 611 or on other support members.

The jig moving portion 620 of the jig unit 600 may include a cylinder portion 621, a first moving portion 622, a second moving portion 623, and a rotating portion 624.

The cylinder portion 621 supports at least one of the pressing jig 612 and the guide jig 611 and may move the pressing jig 612 in the third direction Z. The cylinder portion 621 may include various known pressing members capable of moving the pressing jig 612 in the third direction Z. The cylinder portion 621 may include an elastic portion 621a that supports the pressing jig 612 in the third direction Z. When the cylinder portion 621 includes the elastic portion 621a, it is possible to prevent the electrode plate 10 from being damaged by the pressing of the pressing jig 612 in the third direction Z.

The first moving portion 622 may move the cylinder portion 621 in the first direction X. The first moving portion 622 may include various known moving members capable of moving the cylinder portion 621 in the first direction X.

For example, the first moving portion 622 may include an LM block that supports the cylinder portion 621, an LM rail that guides the LM block in the first direction X, a screw that moves the LM block in the first direction X, and a motor that drives the screw. But the present disclosure is not limited thereto and may include various known devices for moving the cylinder portion 621 in the first direction X.

The second moving portion 623 may move the first moving portion 622 in the second direction Y. The second moving portion 623 may include various known moving members that are capable of moving the first moving portion 622 in the second direction Y. For example, the second moving portion 623 may include an LM block that supports the first moving portion 622, an LM rail that guides the LM block in the second direction Y, a screw that moves the LM block in the second direction Y, and a motor that drives the screw. But the present disclosure is not limited thereto and may include various known devices of moving the first moving portion 622 in the second direction Y.
The rotating portion 624 may rotate the second moving portion 623 around a rotational axis that extends in the third direction Z. The rotating portion 624 may include various known rotation members capable of rotating the second moving portion 623 around a rotation axis in the third direction Z. For example, the rotating portion 624 may include a pulley supporting the second moving portion 623, a belt for rotating the pulley around a rotational axis that extends in the third direction Z, and a motor connected to the belt. But the present disclosure is not limited thereto and may include various known rotating members capable of rotating the second moving portion 623 around a rotation axis in the third direction Z.

Referring again to FIG. 1, the laser cutting portion 700 may be disposed between the first roller 400 and the second roller 500. The laser cutting portion 700 is adjacent to the jig unit 600, and may cut at least one of the coated portion and the non-coated portion of the electrode plate 10 fixed to the jig unit 600 into a set shape using the laser beam LB. The laser beam LB of the laser cutting portion 700 may be irradiated to the electrode plate 10 through the first opening of the guide jig of the jig portion 610 of the jig unit 600 described above, but the present disclosure is not limited thereto. The laser cutting portion 700 may include various known laser cutting members used for cutting through the laser beam LB. For example, the laser cutting portion 700 may include an optical system such as a laser beam oscillator, a collimator, a lens, and a scanner, and a processing vision.

The laser cutting portion 700 may be connected to the controller 900. The controller 900 may control the irradiation position of the laser beam LB of the laser cutting portion 700 with respect to the electrode plate 10 based on the misalignment value in the second direction Y of the electrode plate 10 sensed by the vision portion 300. For example, the controller 900 may control the scanner of the laser cutting portion 700 based on the misalignment value in the second direction Y of the electrode plate 10 sensed by the vision portion 300 to control the irradiation position of the laser beam LB of the laser cutting portion 700 with respect to the electrode plate 10.

The winder 800 may be spaced apart from the jig unit 600 with the second roller 500 interposed therebetween. The winder 800 may be adjacent to the second roller 500. The winder 800 may wind the electrode plate 10 cut in a set shape by the laser beam LB of the laser cutting portion 700.

The controller 900 is connected to the tension controller 100, the meandering controller 200, the vision portion 300, the first roller 400, the jig unit 600, and the laser cutting portion 700. The controller 900 may include various known control members.

The controller 900 may control the tension controller 100 so that the tension of the electrode plate 10 transmitted from the load cell of the first roller 400 maintains a set tension. The controller 900 may control the dancer roller of the tension controller 100 so that the tension of the electrode plate 10 sensed by the load cell of the first roller 400 maintains a set tension.

The controller 900 may control the meandering controller 200 based on the misalignment value in the second direction Y of the electrode plate 10 transmitted from the vision portion 300 to control the meandering of the electrode plate 10 to control the misalignment in the second direction Y of the electrode plate 10. The controller 900 may control the meandering of the electrode plate 10 by using at least one roller rotating in the second direction Y of the meandering controller 200 to control the misalignment of the electrode plate 10 in the second direction Y.

The controller 900 may control each of the jig unit 600 and the laser cutting portion 700 based on the misalignment value in the second direction Y of the electrode plate 10 transmitted from the vision portion 300. The controller 900 may control each of the jig moving portion 620 and the laser cutting portion 700 based on the misalignment value in the second direction Y of the electrode plate 10 sensed by the vision portion 300. The controller 900 may thereby control each of the fixing position of the jig portion 610 with respect to the electrode plate 10 and the irradiation position of the laser beam LB of the laser cutting portion 700 through the opening of the jig portion 610 with respect to the electrode plate 10.

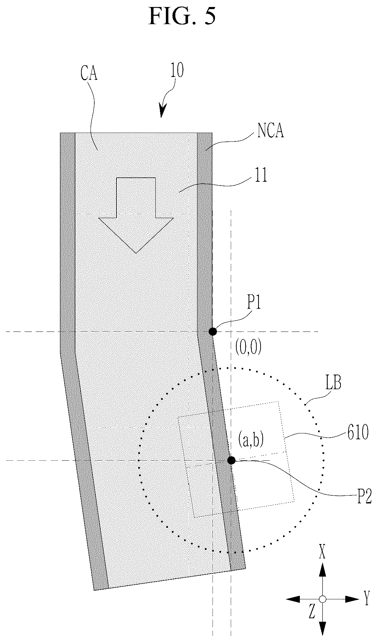

FIG. 5 is a top plan view of an example of cutting an electrode plate using a laser beam of an electrode manufacturing apparatus according to an embodiment.

Referring to FIGS. 1 and 5, the controller 900 controls each of the jig moving portion 620 and the laser cutting portion 700 based on the misalignment value in the second direction Y of the electrode plate 10 so that the fixed position of the jig portion 610 with respect to the electrode plate 10 and the irradiation position of the laser beam LB of the laser cutting portion 700 through the opening of the jig portion 610 with respect to the electrode plate 10 are respectively controlled. The apparatus may thereby cut the electrode plate 10 using the laser beam LB of the electrode manufacturing apparatus.

For example, when the electrode plate 10 moving in the first direction X unintentionally meanders, the vision portion 300 senses the misalignment value in the second direction Y of the electrode plate 10. Thus, the first point P1 that is the initially set fixed position of the jig portion 610 and the irradiation position of the laser beam LB is changed to the second point P2 based on the misalignment value of the second direction Y of the electrode plate 10 by the controller 900. And the fixed position of the jig portion 610 with respect to the electrode plate 10 and the irradiation position of the laser beam LB through the opening of the jig portion 610 are changed corresponding to the second point P2 by the controller 900 so that the cutting by the laser beam LB of the set shape with respect to the coated portion CA and the non-coated portion NCA of the electrode plate 10 may be performed.

In response to the second point P2 being changed from the first point P1 by the controller 900, the apparatus may be configured such that the jig portion 610 moves in each of the first direction X, the second direction Y, and the third direction Z, and rotates around the rotational axis that extends in the third direction Z. Also, the laser beam LB moves in each of the first direction X, the second direction Y, and the third direction Z, and rotates around the rotational axis extending in the third direction Z.

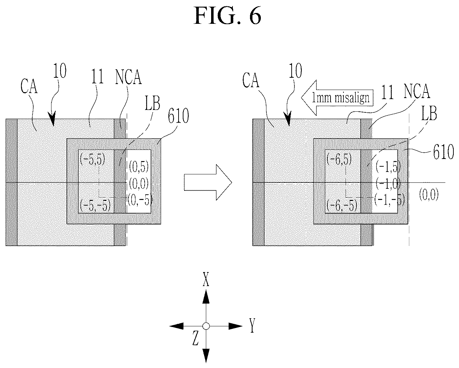

FIG. 6 is a top plan view of another example of cutting an electrode plate using a laser beam of an electrode manufacturing apparatus according to an embodiment.

Referring to FIGS. 6 and 1, as another example, the controller 900 controls each of the jig moving portion 620 and the laser cutting portion 700 based on the misalignment value in the second direction Y of the electrode plate 10. As such, the fixed position of the jig portion 610 with respect to the electrode plate 10 and the irradiation position of the laser beam LB of the laser cutting portion 700 through the opening of the jig portion 610 with respect to the electrode plate 10 are respectively controlled, and the electrode plate 10 is cut using the laser beam LB of the electrode manufacturing apparatus.

For example, when the electrode plate 10 moving in the first direction X unintentionally meanders and the vision portion 300 senses the misalignment value in the second direction Y of the electrode plate 10 as -1 mm, the first coordinate (0,0), which is the initially set fixed position of the jig portion 610 and the irradiation position of the laser beam LB, is changed to the second coordinate (-1,0) based on the misalignment value of the second direction Y of the electrode plate 10 by the controller 900. Also, the position of the jig portion 610 with respect to the electrode plate 10 and the irradiation position of the laser beam LB through the opening of the jig portion 610 are changed by the controller 900 to correspond to the second coordinate (-1,0) so that the cutting of a 10 mm by 10 mm square shape with respect to the coated portion CA and the non-coated portion NCA of the electrode plate 10 may be performed.

In another example, in response to the second coordinate (-1,0) being changed from the first coordinate (0,0) by the controller 900, the movement of the jig portion 610 in the second direction Y and the movement of the laser beam LB in the second direction Y may be performed.

The electrode manufacturing device according to the embodiment may change the fixing position of the jig portion 610 of the jig unit 600 and the irradiation position of the laser beam LB of the laser cutting portion 700 from the initially set processing point to the relative processing point by synchronizing with the misalignment value of the electrode plate 10 due to the meandering of the electrode plate 10. Thus, even if the electrode plate 10 moves in the first direction X in a roll-to-roll apparatus and unintentionally meanders, the electrode plate 10 may still be cut into the set shape. That is, the electrode manufacturing device according to an embodiment may control (or compensate for) the meandering of the electrode plate 10 by using the meandering controller 200 even if the electrode plate 10 moves in the first direction X.

The electrode manufacturing apparatus according to the embodiment may maintain the tension of the electrode plate 10 moving in the first direction X at a set tension by using the tension controller 100 and the load cell of the first roller 400. Thus, even if the electrode plate 10 unintentionally meanders, the electrode manufacturing apparatus according to an embodiment maintains the tension of the electrode plate 10 at a set tension using the tension controller 100, controls the meandering of the electrode plate 10 using the meandering controller 200, and simultaneously changes the fixing position of the jig portion 610 of the jig unit 600 and the irradiation position of the laser beam LB of the laser cutting portion 700 from an initially set processing point to a relative processing point by synchronizing with the misalignment value of the electrode plate 10. The electrode plate 10 may thereby be cut into a set shape.

As described above, even if the electrode plate 10 is transported in a roll-to-roll manner and unintentionally meanders such that the electrode plate 10 is misaligned, an electrode manufacturing device is provided in which electrode processing precision is improved by cutting the electrode plate 10 into a set shape using the laser beam LB.

Embodiments are set out in the following clauses:
Clause 1. An electrode manufacturing apparatus comprising: a first roller configured to move an electrode plate that includes a coated portion having an electrode active material extending in a first direction and a non-coated portion adjacent to the coating portion in a second direction intersecting the first direction; a second roller that is spaced from the first roller and configured to move the electrode plate in the first direction; a jig unit disposed between the first roller and the second roller, the jig unit being configured to press and fix the electrode plate in a third direction intersecting the first direction; a laser cutting portion that is adjacent to the jig unit and is configured to cut at least one of the coated and uncoated portions of the electrode plate fixed to the jig unit into a set shape using a laser beam; and a controller that is connected to the jig unit and the laser cutting portion and is configured to control the jig unit and the laser cutting portion.
Clause 2. The electrode manufacturing apparatus according to clause 1, further comprising a vision portion that is connected to the controller and is configured to sense a misalignment value in the second direction of the electrode plate moving in the first direction.
Clause 3. The electrode manufacturing apparatus according to clause 2, wherein the controller is configured to control a fixing position of the jig unit with respect to the electrode plate and an irradiation position of the laser beam of the laser cutting portion based on the misalignment value of the electrode plate in the second direction.
Clause 4. The electrode manufacturing apparatus according to any preceding clause, wherein the jig unit includes: a jig portion that includes a guide jig that is configured to support a front surface of the electrode plate facing the front surface of the electrode plate and a pressing jig that is configured to press a rear surface of the electrode plate facing the rear surface of the electrode plate, and a jig moving portion that is configured to move the jig portion.
Clause 5. The electrode manufacturing apparatus according to clause 4, wherein the jig moving portion includes: a cylinder portion configured to move the pressing jig in the third direction; a first moving portion configured to move the cylinder portion in the first direction; and a second moving portion configured to move the first moving portion in the second direction.
Clause 6. The electrode manufacturing apparatus according to clause 5, wherein the jig moving portion further includes a rotating portion configured to rotate the second moving portion around a rotational axis that extends in the third direction.
Clause 7. The electrode manufacturing apparatus according to clause 5 or 6 wherein the cylinder portion includes an elastic portion supporting the pressing jig in the third direction.
Clause 8. The electrode manufacturing apparatus according to any one of clauses 4 to 7, wherein the guide jig includes a first opening configured to expose the front surface of the electrode plate, and the pressing jig includes a second opening configured to expose the rear surface of the electrode plate corresponding to the first opening.
Clause 9. The electrode manufacturing apparatus according to clause 8, wherein the laser cutting portion is positioned in alignment with the guide jig and configured to irradiate the laser beam to the electrode plate through the first opening of the guide jig.
Clause 10. The electrode manufacturing apparatus according to clause 9, wherein the controller is configured to control a fixing position of the guide jig with respect to the electrode plate and an irradiation position of the laser beam through the first opening based on the misalignment value of the electrode plate in the second direction.
Clause 11. The electrode manufacturing apparatus according to any one of clauses 2 to 19, wherein the vision portion is spaced from the jig unit with the first roller positioned therebetween.
Clause 12. The electrode manufacturing apparatus according to clause 11, wherein the vision portion includes: a first vision roller configured to support a rear surface of the electrode plate; a first camera configured to photograph a front surface of the electrode plate; and a second vision roller spaced apart from the first vision roller in the first direction and supporting the front surface of the electrode plate; and a second camera configured to photograph a rear surface of the electrode plate.
Clause 13. The electrode manufacturing apparatus according to clause 12, wherein the vision portion further includes: a first vision moving portion supporting the first camera and configured to move the first camera in the second direction; and a second vision moving portion supporting the second camera and configured to move the second camera in the second direction.
Clause 14. The electrode manufacturing apparatus according to any one of clauses 11 to 13, further comprising a meandering controller spaced apart from the first roller with the vision portion therebetween, the meandering controller being configured to control alignment of the electrode plate in the second direction.
Clause 15. The electrode manufacturing apparatus according to clause 14, wherein the controller is connected to the meandering controller, and the controller is configured to control the meandering controller based on the misalignment value of the electrode plate in the second direction.
Clause 16. The electrode manufacturing apparatus according to clause 14 or 15, further comprising a tension controller spaced apart from the vision portion with the meandering controller therebetween, the tension controller being configured to control tension of the electrode plate.
Clause 17. The electrode manufacturing apparatus according to clause 16, wherein the tension controller includes a dancer roller configured to press the electrode plate in the third direction.
Clause 18. The electrode manufacturing apparatus according to clause 17, wherein the first roller includes a load cell that is configured to sense tension on the electrode plate.
Clause 19. The electrode manufacturing apparatus according to clause 18, wherein the controller is connected to the first roller and the tension controller, and wherein the controller is configured to control the dancer roller of the tension controller so that the tension of the electrode plate is maintained at a set tension.
Clause 20. The electrode manufacturing apparatus according to any preceding clause, further comprising a winder that is adjacent to the second roller and is configured to wind the electrode plate.

While embodiments of the present disclosure have been described, it is to be understood that the disclosure is not limited to the disclosed embodiments. Rather, the present disclosure covers various modifications and equivalent arrangements.

### <Description of symbols>

400: first roller
500: second roller
600: jig unit
700: laser cutting portion
900: controller

## Claims

1. An electrode manufacturing apparatus comprising:
a first roller configured to move an electrode plate that includes a coated portion having an electrode active material extending in a first direction and a non-coated portion adjacent to the coating portion in a second direction intersecting the first direction;
a second roller that is spaced from the first roller and configured to move the electrode plate in the first direction;
a jig unit disposed between the first roller and the second roller, the jig unit being configured to press and fix the electrode plate in a third direction intersecting the first direction;
a laser cutting portion that is adjacent to the jig unit and is configured to cut at least one of the coated and uncoated portions of the electrode plate fixed to the jig unit into a set shape using a laser beam; and
a controller that is connected to the jig unit and the laser cutting portion and is configured to control the jig unit and the laser cutting portion.

2. The electrode manufacturing apparatus as claimed in claim 1, further comprising a vision portion that is connected to the controller and is configured to sense a misalignment value in the second direction of the electrode plate moving in the first direction.

3. The electrode manufacturing apparatus as claimed in claim 2, wherein the controller is configured to control a fixing position of the jig unit with respect to the electrode plate and an irradiation position of the laser beam of the laser cutting portion based on the misalignment value of the electrode plate in the second direction.

4. The electrode manufacturing apparatus as claimed in claim 3, wherein the jig unit includes:
a jig portion that includes a guide jig that is configured to support a front surface of the electrode plate facing the front surface of the electrode plate and a pressing jig that is configured to press a rear surface of the electrode plate facing the rear surface of the electrode plate, and
a jig moving portion that is configured to move the jig portion.

5. The electrode manufacturing apparatus as claimed in claim 4, wherein the jig moving portion includes:
a cylinder portion configured to move the pressing jig in the third direction;
a first moving portion configured to move the cylinder portion in the first direction; and
a second moving portion configured to move the first moving portion in the second direction;
wherein the jig moving portion optionally further includes a rotating portion configured to rotate the second moving portion around a rotational axis that extends in the third direction.

6. The electrode manufacturing apparatus as claimed in claim 5, wherein the cylinder portion includes an elastic portion supporting the pressing jig in the third direction.

7. The electrode manufacturing apparatus as claimed in any one of claims 4 to 6, wherein the guide jig includes a first opening configured to expose the front surface of the electrode plate, and the pressing jig includes a second opening configured to expose the rear surface of the electrode plate corresponding to the first opening.

8. The electrode manufacturing apparatus as claimed in claim 7, wherein the laser cutting portion is positioned in alignment with the guide jig and configured to irradiate the laser beam to the electrode plate through the first opening of the guide jig.

9. The electrode manufacturing apparatus as claimed in claim 8, wherein the controller is configured to control a fixing position of the guide jig with respect to the electrode plate and an irradiation position of the laser beam through the first opening based on the misalignment value of the electrode plate in the second direction.

10. The electrode manufacturing apparatus as claimed in any one of claims 2 to 9, wherein the vision portion is spaced from the jig unit with the first roller positioned therebetween.

11. The electrode manufacturing apparatus as claimed in claim 10, wherein the vision portion includes:
a first vision roller configured to support a rear surface of the electrode plate;
a first camera configured to photograph a front surface of the electrode plate; and
a second vision roller spaced apart from the first vision roller in the first direction and supporting the front surface of the electrode plate; and
a second camera configured to photograph a rear surface of the electrode plate;
wherein the vision portion further optionally includes:
a first vision moving portion supporting the first camera and configured to move the first camera in the second direction; and
a second vision moving portion supporting the second camera and configured to move the second camera in the second direction.

12. The electrode manufacturing apparatus as claimed in any one of claims 10 to 11, further comprising a meandering controller spaced apart from the first roller with the vision portion therebetween, the meandering controller being configured to control alignment of the electrode plate in the second direction.

13. The electrode manufacturing apparatus as claimed in claim 12, wherein the controller is connected to the meandering controller, and the controller is configured to control the meandering controller based on the misalignment value of the electrode plate in the second direction.

14. The electrode manufacturing apparatus as claimed in claim 12 or 13, further comprising a tension controller spaced apart from the vision portion with the meandering controller therebetween, the tension controller being configured to control tension of the electrode plate;
wherein the tension controller optionally includes a dancer roller configured to press the electrode plate in the third direction; and/or
wherein the first roller includes a load cell that is configured to sense tension on the electrode plate; and/or
wherein the electrode manufacturing apparatus further comprises a winder that is adjacent to the second roller and is configured to wind the electrode plate.

15. The electrode manufacturing apparatus as claimed in claim 14, wherein the controller is connected to the first roller and the tension controller, and
wherein the controller is configured to control the dancer roller of the tension controller so that the tension of the electrode plate is maintained at a set tension.
